# EUROPEAN PATENT SPECIFICATION

(11) **EP 3 059 822 B1**
(45) Date of publication and mention of the grant of the patent: **03.11.2021**
(21) Application number: 15155857.4
(22) Date of filing: 20.02.2015
(51) Int. Cl.: H02G 3/12, H02G 3/08

(54) **Electrical installation box assembly**
Elektroinstallationskastenanordnung
Ensemble formant boîtier d'installation électrique

(43) Date of publication of application: 24.08.2016
(73) Proprietor: ABB Schweiz AG, 5400 Baden (CH)
(72) Inventor: Andersson, Johan, 06100 Porvoo (FI); Luomi, Juho, 06100 Porvoo (FI); Tervo, Pekka, 06100 Porvoo (FI)
(74) Representative: Kolster Oy Ab

(56) References cited:
- EP-A1- 2 822 120
- WO-A1-90/12433
- WO-A1-03/081054
- WO-A1-2015/118241
- DE-A1- 2 312 605
- FR-A1- 3 000 308
- FR-A1- 3 000 309
- US-A- 3 620 401

## Description

### FIELD OF THE INVENTION

The invention relates to an electrical installation box assembly and more specifically to an electrical installation box assembly for installation into an opening in a wall of a structure.

### BACKGROUND OF THE INVENTION

In electrical installation electrical installation boxes, such as junction boxes or mounting boxes, are used to house interconnections of electrical conductors and electrical components or devices, for example. An electrical installation box may be installed in a wall of a structure, such as a building, a vehicle or a vessel, for example. The wall, or a wall panel thereof, may be provided with an opening into which the electrical installation box may be inserted especially in case of flush mounting. In this case the electrical installation box is mounted essentially flush with a first side of the wall and the electrical installation box then extends away from a second side of the wall, for example, between a space between two walls. EP 2822120 discloses an example of a mounting box.

In case of an installation of an electrical installation box into a wall of an existing structure, the second side of the wall is typically not readily accessible and the electrical installation box needs to be installed, or retrofitted, into the opening in the wall from the first side of the wall typically by using a specific retrofit electrical installation box which is suitable for installation into the opening in the wall from the first side of the wall.

In case of such retrofitting of the electrical installation box from the first side of the wall, when the second side of the wall is not easily accessible, the fastening of the electrical installation box to the wall cannot be performed from the second side of the wall. In this case the fastening of the electrical installation box to the wall may be performed from the first side of the wall after insertion of the electrical installation box into the opening in the wall from the first side of the wall by using screws and possible counterparts thereof, for example.

A problem with the above-described solution is that installation by using screws and possible counterparts thereof is time-consuming and also the number of components and tools required for the installation may be high.

WO 90/12433 discloses a wall mounting plate assembly comprising a plug portion which is receivable within a port provided in a face plate which includes a tubular extension. The tubular extension acts as a guide for accommodating movement of the plug from a nonsecuring position to an engaging or operative position. A spring bias is created as the plug is forced into the face plate which serves to draw the face plate towards wall engaging arms which moved outwardly past the tubular extension as the plug is moved to the engaging position.

FR 1203507 discloses electrical accessory comprising an electrical-accessory module and an electrical box. The electrical box makes it possible to fasten the electrical-accessory module in the wall. The electrical box includes fastener means that are adapted to catch onto the wall and comprise rectangular flaps that are cut out in the side wall of the electrical box. At rest, the flaps are in their retracted position, i.e. their outer faces are situated flush with the outer face of the remainder of the side wall of the electrical box. Projecting from its inside face, each of the flaps includes a ramp having thickness that increases going from front to rear. When the electrical-accessory module is fitted into the electrical box, it bears against the ramps, thereby making it possible to deploy the flaps into their extended positions, i.e. projecting from the outer face of the side wall.

WO 03/081054 discloses an expansion unit consisting of two coaxially arranged elements, where the coaxial element is inserted in a preformed opening, the outer element is expanded by applying an axial load of the element, and the expansion is locked by means of inserting the inner coaxial element, whereby corresponding engagement means provided at the inner and outer side, respectively, of the coaxial elements engage and lock the expanding unit in the opening. Additional relevant prior art is disclosed in FR3000309 and DE2312605A1.

### BRIEF DESCRIPTION OF THE INVENTION

The object of the invention is thus to provide an apparatus so as to solve or at least alleviate the above problem. The object of the invention is achieved with an electrical installation box assembly that is characterized by what is stated in the independent claim. Preferred embodiments of the invention are described in the dependent claims.

The invention is based on the idea of providing the electrical installation box assembly with a fastening part comprising at least one flexibly mounted projection and at least one flange portion such that the projection is adapted to engage the wall in its resting position when the fastening part is inserted inside an opening in a wall such that the at least one flange portion is in contact with the wall, and with a box case which locks the at least one projection of the fastening part in its resting position upon insertion of the box case into the fastening part.

An advantage of the solution according to the invention is that it enables a retrofit installation of the electrical installation box into an opening in the wall to be carried out in a simple and fast manner without any additional components.

### BRIEF DESCRIPTION OF THE FIGURES

In the following, the invention will be described in more detail in connection with preferred embodiments with reference to the accompanying drawing, in which
Figure 1 shows a perspective view of an example of an electrical installation box assembly according to an embodiment;
Figure 2 shows a perspective view of an example of an electrical installation box assembly according to an embodiment;
Figure 3 shows a perspective view of an example of an electrical installation box assembly according to an embodiment;
Figure 4 shows a perspective view of an example of an electrical installation box assembly according to an embodiment; and
Figure 5 shows a sectional view of an example of an electrical installation box assembly according to an embodiment.

### DETAILED DESCRIPTION OF THE INVENTION

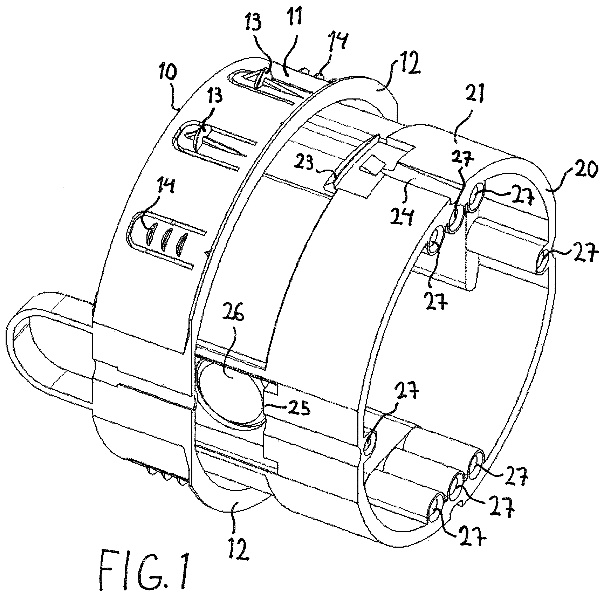

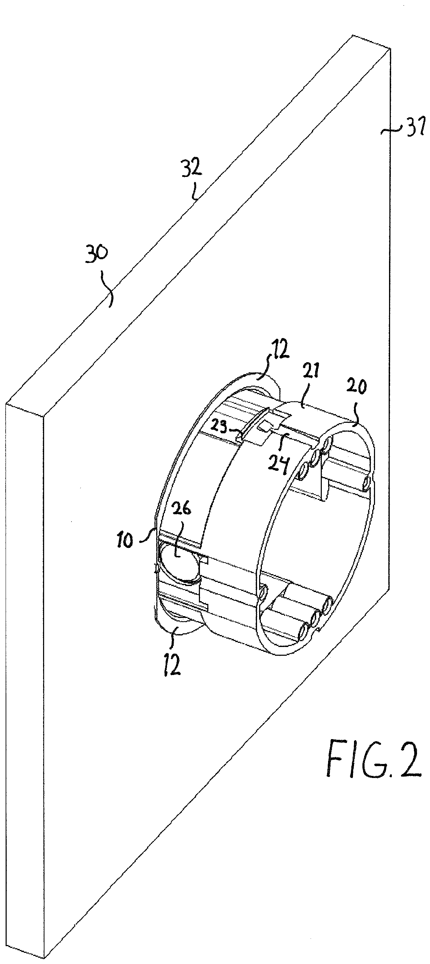

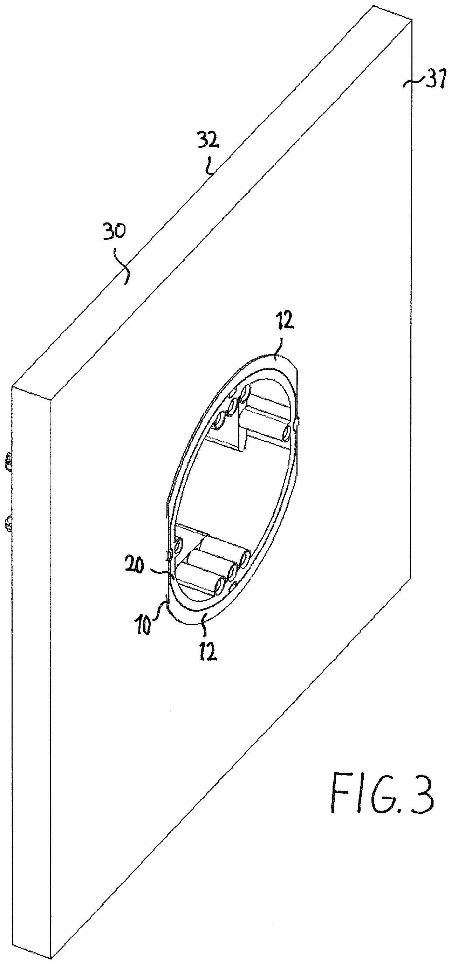

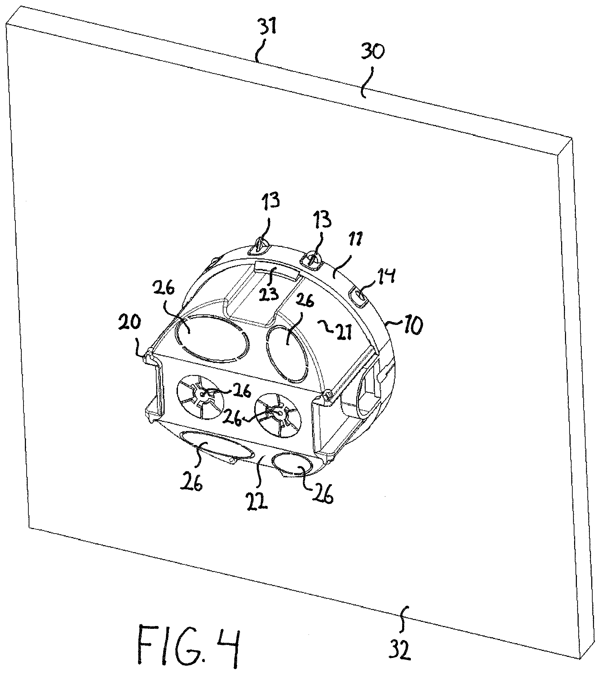

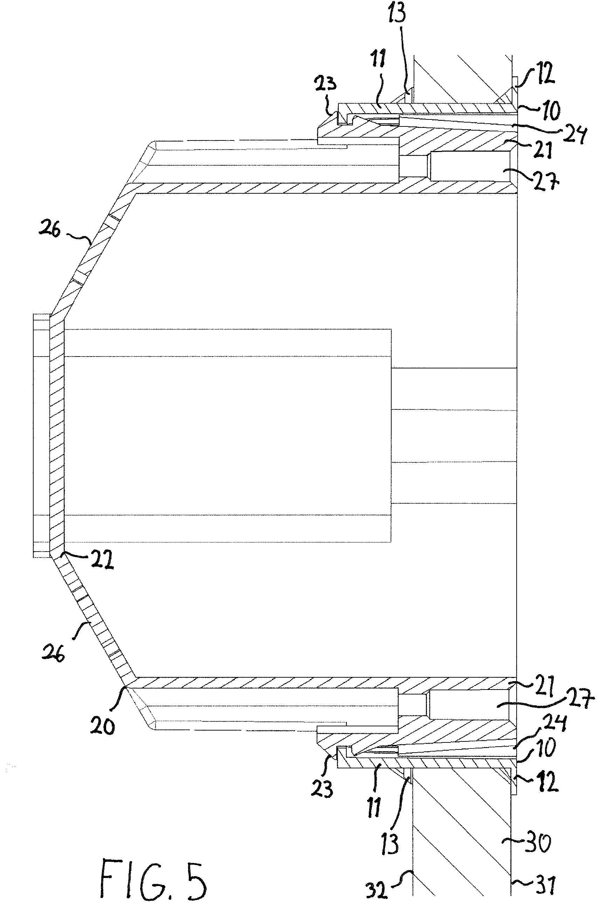

Figure 1 shows an example of an electrical installation box assembly according to an embodiment. Figure 2 shows an example of an electrical installation box assembly corresponding to Figure 1, which is partly installed in a wall. Figure 3 shows an example of an electrical installation box assembly corresponding to Figure 1, which is fully installed in a wall and seen from a first side of the wall. Figure 4 shows an example of an electrical installation box assembly corresponding to Figure 1, which is fully installed in a wall and seen from a second side of the wall. Figure 5 shows a sectional view of an example of an electrical installation box assembly. According to an embodiment, an electrical installation box assembly for installation into an opening in a wall 30 of a structure comprises a fastening part 10 and a box case 20. According to an embodiment, the electrical installation box assembly is a retrofit electrical installation box assembly. In other words, the electrical installation box assembly is adapted for retrofitting into the opening in the wall 30.

According to the invention, the fastening part 10 comprises a tubular side wall portion 11, which extends between a first end and a second end of the fastening part 10, and at least one flange portion 12 at the first end of the fastening part 10 extending radially from the side wall portion 11 of the fastening part 10. The examples shown in the figures comprise two collar-like flange portions 12 but the number and shape of the flange portion(s) can vary. Moreover, the fastening part 10 comprises at least one flexibly mounted projection 13, 14 located at a distance from the at least one flange portion 12 and extending radially from the side wall portion 11 of the fastening part 10 in a resting position.

The at least one flexibly mounted projection 13, 14 is adapted to engage the wall 30 in its resting position when the fastening part is inserted, with the second end thereof ahead, inside the opening in the wall from a first side 31 of the wall such that the at least one flange portion 12 is in contact with the first side of the wall.

According to the invention, at least one 13 of the at least one flexibly mounted projection of the fastening part 10 is located at a first distance from the at least one flange portion 12 and adapted to move towards inside of the side wall portion 11 of the fastening part 10 during the insertion of the fastening part 10, with the second end (i.e. the opposite end to the end comprising the at least one flange portion 12) thereof ahead, into the opening in the wall 30 from the first side 31 of the wall, and to return to its resting position upon entering a second side 32 of the wall, when the fastening part 10 is inserted inside the opening in the wall 30 such that the at least one flange portion 12 is in contact with the first side 31 of the wall, thus engaging the wall such that the wall 30 is sandwiched between the at least one flange portion 12 and the at least one projection 13. Figure 1 shows an example of beak-like projections 13 in their resting position before the fastening part is inserted into an opening of the wall 30. Figures 2 to 4 show an example of the fastening part 10 pushed into an opening in the wall 30, from the first side 31 of the wall 30, such that the beak-like projections 13 have during insertion of the fastening part 10 flexed inside thus enabling the entering of the fastening part into the opening of the wall, which opening has a diameter which is essentially equal to or slightly greater than the outer diameter of the fastening part 10 such that the fastening part preferably firmly engages the opening. Upon reaching a fully inserted position of the fastening part 10 into the opening of the wall 30, the projections 13 have returned to their resting position and the flange portions 12 are resting essentially in contact with the first side 31 of the wall 30, as can be seen in Figures 4 and 5. As a result, the wall 30 is sandwiched, i.e. gripped, between the flange portions 12 and the projections 13. According to an embodiment, the first distance between the at least one projection 13 of the fastening part 10 and the at least one flange portion 12 of the fastening part 10 is equal to or greater than a thickness of the wall 30. Said distance between the at least one projection 13 of the fastening part 10 and the at least one flange portion 12 of the fastening part 10 is preferably as close as possible to the thickness of the wall 30 into which the electrical installation box assembly is to be installed in order to achieve as secure fastening of the electrical installation box assembly into the wall 30 as possible. It is also possible that fastening part 10 comprises two or more flexibly mounted projections 13 of which some or all have a different distance to the flange portion 12 of the fastening part 10. This enables the same fastening part 10 to be used for walls 30 of different thicknesses while still achieving a secure fastening of the electrical installation box assembly into the wall 30.

According to an embodiment, at least one 14 of said at least one flexibly mounted projection of the fastening part 10 is located at a second distance from the at least one flange portion 12 and adapted to engage, in its resting position, an interior edge of the opening of the wall 30, when the fastening 10 part is inserted, with the second end thereof ahead, inside the opening in the wall from the first side 31 of the wall such that the at least one flange portion 12 is in contact with the first side of the wall. Examples of possible projections 14 of the fastening part 10, which can engage the edge of the opening of the wall 30, when the fastening part 10 is fully inserted into the opening, which opening has a diameter which is essentially equal to or slightly greater than the outer diameter of the fastening part 10, are shown in Figures 1 and 4. Such projections 14 preferably extend radially from the side wall portion 11 of the fastening part 10 less than the projections 13 of the fastening part. According to an embodiment, the second distance between the at least one projection 14 of the fastening part 10 and the at least one flange portion 12 of the fastening part is smaller than a thickness of the wall 30. As shown in Figure 4, projection 14 is at least partly left inside the opening of the wall 30, when the fastening 10 part is inserted therein thus gripping the interior edge of the opening of the wall 30. The number and shape of the projections 14 can vary and can comprise one or more peaks or a generally protruding uneven or roughened surface, for example.

According to the invention, the box case 20 comprises a tubular side wall portion 21 extending between a first end and a second end of the box case 20, and a bottom wall portion 22 at the first end of the box case 20. An outer diameter of the side wall portion 21 of the box case 20 is equal to or smaller than an inner diameter of the side wall portion 11 of the fastening part 10 such that upon inserting the box case 20, with the first end (i.e. the end with the bottom wall portion 22) of the box case 20 ahead, into the fastening part 10, from the first end of the fastening part, the box case locks the at least one projection 13, 14 of the fastening part 10 into its resting position. Figures 3 to 5 show a situation in which the box case 20 is fully inserted into the fastening part 10. When the box case 20 is fully inserted into the fastening part 10, the tubular side wall portion 21 of the box case prevents the projections 13, 14 of the fastening part 10 from flexing inside thus effectively locking them into their resting positions. As a result, the electrical installation box assembly comprising the fastening part 10 and the box case 20 is fixed into the opening of the wall 30.

Thus, according to an embodiment, in order to assemble the electrical installation box assembly comprising the fastening part 10 and the box case 20 into the opening of the wall, the fastening part 10 is firstly fully inserted into the opening of the wall 30 as described above. After that the box case is fully inserted into the fastening part 10. Upon assembling the electrical installation box assembly into the opening of the wall the at least one projection 13, 14 of the fastening part 10 may return to its resting position by itself after possibly flexing during the insertion of the fastening part 10 into the opening of the wall. If the projection(s) 13, 14, or some of them, do not return to their resting position by themselves, then the insertion of the box case 20 into the fastening part 10 preferably forces any such projections 13, 14 still in their flexed positions into their resting positions, and consequently locks all the projections 13, 14 of the fastening part 10 into their resting positions (i.e. non-flexed positions).

According to an embodiment, the box case 20 comprises at least one flexibly mounted projection 23 extending radially from the side wall portion 21 of the box case 20 in a resting position and being adapted to move towards inside of the side wall portion 21 of the box case 20 during insertion of the box case 20 into the fastening part 10. Moreover, the at least one flexibly mounted projection 23 is adapted to engage the fastening part 10, when the box case 20 is fully inserted into the fastening part 10, to prevent the box case 20 from moving out from the fastening part 10. Figures 1 and 2 show an example of a beak-like projection 23 in its resting position before the box case 20 is fully inserted into the fastening part 10. As seen in figures 4 and 5, when the box case 20 is fully inserted into the fastening part 10, the projections 23 of the box case 20 have engaged the fastening part 10 thus locking the box case 20 inside the fastening part 10 and preventing the box case from sliding out of the fastening part. According to an embodiment, the at least one projection 23 of the box case is configured to be pressed into its flexed position towards inside of the side wall portion 21 of the box case 20 to enable the removal of the box case 20 from inside of the fastening part 10. For this purpose the box case may shaped to include a groove 24 or an opening via which a tool, such as a screwdriver or the like, can be pushed against the projection 23 of the box case in order to push it into its flexed position thus enabling the possible disassembling of the electrical installation box assembly and the possible removal thereof from the opening of the wall 30.

According to an embodiment, the fastening part 10 and the box case 20 each comprise at least one mating surface which engage or generally contact each other, when the box case 20 is fully inserted into the fastening part 10, to prevent the box case from moving further into the fastening part. As an example, the embodiments shown in Figure 1 show one mating surface 25 of the box case 20, which engages a corresponding mating surface (not visible in the Figure) of the fastening part 10, when the box case 20 is fully inserted into the fastening part 10. It should be noted that the number and shape of such mating surfaces of the box case 20 and the fastening part 10 may vary.

According to the invention, when the box case 20 is fully inserted into the fastening part 10, the second end of the box case is essentially flush with the first end of the fastening part. This can be seen in the examples of Figures 3 and 5. Moreover, according to an embodiment, when the fastening part 10 is fully inserted into the opening of the wall 30 from the first side of the wall and the box case 20 is fully inserted into the fastening part 10, both the second end of the box case and the first end of the fastening part are essentially flush with the first side of the wall and the box case extends away from the wall on the second side of the wall.

According to an embodiment, the at least one projection 13 of the fastening part 10 is an integral part of the fastening part. Thus, the at least one projection 13 of the fastening part 10 can be made of the same material as the rest of the fastening part. In a similar manner, according to an embodiment, the at least one projection 23 of the box case 20 is an integral part of the box case. Thus, the at least one projection 23 of the box case 10 can be made of the same material as the rest of the box case.

According to an embodiment, the fastening part 10 and/or the box case 20 can be made of plastic material, for example. It is possible to manufacture both the fastening part 10 and the box case 20 with single injection moulding processes, for example.

According to an embodiment, cross profiles of the tubular side wall portions 11, 21 of the fastening part 10 and the box case 20 are at least partly circular. According to an embodiment, the cross profiles of the tubular side wall portions of the fastening part and the box case are mainly circular. The examples of Figures 1 to 5 show examples in which the cross profiles of the tubular side wall portions 11, 21 of the fastening part 10 and the box case 20, when see along a longitudinal axis of the tubular wall portions 11, 21, are mainly circular such that they comprise flat portions on both sides.

According to an embodiment, the side wall portion 21 and/or the bottom wall portion 22 of the box case 20 comprise at least one aperture and/or at least one knockout arrangement 26. The examples of Figures 1 to 5 show examples of such knockout arrangements 26, which enable the creation of knockout holes for introducing electric conductors into the box case 20 through the side wall portion 21 and/or the bottom wall portion 22 of the box case 20, for example. The number and shape of such apertures or knockout arrangements 26 may vary. According to an embodiment, the box case 20 is adapted to house one or more interconnections of electrical conductors and/or one or more electrical components or devices (not shown in the figures). For this purpose the box case may comprise, in addition to the possible apertures or knockout arrangements 26, suitable parts into which interconnections of electrical conductors and/or one or more electrical components or devices can be fitted. In the examples of Figures 1, 2 and 5 the box case 20 comprises screw holes 27 at least some of which can be used to fasten electrical components or devices into the box case 20.

According to an embodiment, the box case 20 is adapted to receive a cover (not shown in the figures) on the second end of the box case. For this purpose the box case may comprise suitable parts for enabling a possible cover to be fastened to the box case. In the examples of Figures 1, 2 and 5 the box case 20 comprises screw holes 27 at least some of which can be used to attach a cover on the end of the box case 20.

It is obvious to a person skilled in the art that as technology advances, the basic idea of the invention can be implemented in a variety of ways. Consequently, the invention and its embodiments are not restricted to the above examples, but can vary within the scope of the claims.

## Claims

1. An electrical installation box assembly for installation into an opening in a wall of a structure, comprising:
a fastening part (10) comprising a tubular side wall portion (11) extending between a first end and a second end of the fastening part, and at least one flange portion (12) at the first end of the fastening part extending radially from the side wall portion of the fastening part, and at least one flexibly mounted projection (13, 14) located at a distance from the at least one flange portion and extending radially from the side wall portion of the fastening part in a resting position and being adapted to engage the wall (30) in its resting position when the fastening part is inserted, with the second end thereof ahead, inside the opening in the wall from a first side (31) of the wall such that the at least one flange portion is in contact with the first side of the wall; and
a box case (20) comprising a tubular side wall portion (21) extending between a first end and a second end of the box case, and a bottom wall portion (22) at the first end of the box case, wherein an outer diameter of the side wall portion of the box case is equal to or smaller than an inner diameter of the side wall portion of the fastening part such that upon inserting the box case, with the first end of the box case ahead, into the fastening part, from the first end of the fastening part, the box case locks the at least one projection of the fastening part into its resting position, and wherein a length of the box case (20) between the first end and the second end thereof is greater than a length of the fastening part (10) between the first end and the second end thereof, such that when the box case is fully inserted into the fastening part, the first end of the box case (20) extends through the fastening part (10), wherein, when the box case (20) is fully inserted into the fastening part (10), the second end of the box case is essentially flush with the first end of the fastening part,
wherein at least one (13) of said at least one flexibly mounted projection of the fastening part (10) is located at a first distance from the at least one flange portion (12), **characterized in that** said at least one (13) of said at least one flexibly mounted projection of the fastening part (10) is adapted to move towards inside of the side wall portion (11) of the fastening part during the insertion of the fastening part, with the second end thereof ahead, into the opening in the wall (30) from the first side (31) of the wall, and to return to its resting position by itself upon entering a second side (32) of the wall, when the fastening part is inserted inside the opening in the wall such that the at least one flange portion is in contact with the first side of the wall, thus engaging the wall such that the wall is sandwiched between the at least one flange portion and the at least one projection.

2. An electrical installation box assembly as claimed in claim 1, wherein the first distance between the at least one projection (13) of the fastening part (10) and the at least one flange portion (12) of the fastening part is equal to a thickness of the wall (30).

3. An electrical installation box assembly as claimed in claim 1 or 2, wherein at least one (14) of said at least one flexibly mounted projection of the fastening part (10) is located at a second distance from the at least one flange portion (12) and adapted to engage, in its resting position, an interior edge of the opening of the wall, when the fastening part is inserted, with the second end thereof ahead, inside the opening in the wall from the first side of the wall such that the at least one flange portion is in contact with the first side of the wall.

4. An electrical installation box assembly as claimed in claim 4, wherein the second distance between the at least one projection (14) of the fastening part (10) and the at least one flange portion (12) of the fastening part is smaller than a thickness of the wall (30).

5. An electrical installation box assembly as claimed in any one of claims 1 to 4, wherein the box case (20) comprises at least one flexibly mounted projection (23) extending radially from the side wall portion (21) of the box case in a resting position and being adapted to move towards inside of the side wall portion of the box case during insertion of the box case into the fastening part (10), and to engage the fastening part, when the box case is fully inserted into the fastening part, to prevent the box case from moving out from the fastening part.

6. An electrical installation box assembly as claimed in any one of claims 1 to 5, wherein the fastening part (10) and the box case (20) each comprise at least one mating surface (25) which engage each other, when the box case is fully inserted into the fastening part, to prevent the box case from moving further into the fastening part.

7. An electrical installation box assembly as claimed in claim 6, wherein, when the fastening part (10) is fully inserted into the opening of the wall (30) from the first side of the wall and the box case (20) is fully inserted into the fastening part, both the second end of the box case and the first end of the fastening part are essentially flush with the first side of the wall and the box case extends away from the wall on the second side of the wall.

8. An electrical installation box assembly as claimed in any one of claims 1 to 7, wherein the at least one projection (13, 14) of the fastening part (10) is an integral part of the fastening part.

9. An electrical installation box assembly as claimed in any one of claims 1 to 8, wherein the at least one projection (23) of the box case (20) is an integral part of the box case.

10. An electrical installation box assembly as claimed in any one of claims 1 to 9, wherein the fastening part (10) and/or the box case (20) are made of plastic material.

11. An electrical installation box assembly as claimed in any one of claims 1 to 10, wherein cross profiles of the tubular side wall portions (11, 21) of the fastening part (10) and the box case (20) are at least partly circular.

12. An electrical installation box assembly as claimed in claim 11, wherein the cross profiles of the tubular side wall portions (11, 21) of the fastening part (10) and the box case (20) are mainly circular.

13. An electrical installation box assembly as claimed in any one of claims 1 to 12, wherein the side wall portion (21) and/or the bottom wall portion (22) of the box case comprise at least one aperture and/or at least one knockout arrangement (26).

## Patentansprüche

1. Elektroinstallationsdosenanordnung zum Einbau in eine Öffnung in einer Wand eines Bauwerks, umfassend:
ein Befestigungsteil (10), umfassend einen röhrenförmigen Seitenwandabschnitt (11), der sich zwischen einem ersten Ende und einem zweiten Ende des Befestigungsteils erstreckt, und mindestens einen Flanschabschnitt (12) am ersten Ende des Befestigungsteils, der sich radial vom Seitenwandabschnitt des Befestigungsteils erstreckt, und mindestens einen flexibel montierten Vorsprung (13, 14), der sich in einem Abstand vom mindestens einen Flanschabschnitt befindet und sich in einer Ruheposition radial vom Seitenwandabschnitt des Befestigungsteils erstreckt und so eingerichtet ist, dass er in seiner Ruheposition mit der Wand (30) in Eingriff kommt, wenn das Befestigungsteil mit seinem zweiten Ende voran von einer ersten Seite (31) der Wand aus in die Öffnung in der Wand eingeführt wird, derart, dass der mindestens eine Flanschabschnitt in Kontakt mit der ersten Seite der Wand ist; und
ein Dosengehäuse (20), umfassend einen röhrenförmigen Seitenwandabschnitt (21), der sich zwischen einem ersten Ende und einem zweiten Ende des Dosengehäuses erstreckt, und einen Bodenwandabschnitt (22) am ersten Ende des Dosengehäuses, wobei ein Außendurchmesser des Seitenwandabschnitts des Dosengehäuses gleich oder kleiner als ein Innendurchmesser des Seitenwandabschnitts des Befestigungsteils ist, derart, dass beim Einführen des Dosengehäuses mit dem ersten Ende des Dosengehäuses voran in das Befestigungsteil vom ersten Ende des Befestigungsteils aus das Dosengehäuse den mindestens einen Vorsprung des Befestigungsteils in seiner Ruheposition verriegelt, und wobei eine Länge des Dosengehäuses (20) zwischen dem ersten Ende und dem zweiten Ende desselben größer ist als eine Länge des Befestigungsteils (10) zwischen dem ersten Ende und dem zweiten Ende desselben, derart, dass, wenn das Dosengehäuse vollständig in das Befestigungsteil eingeführt ist, das erste Ende des Dosengehäuses (20) sich durch das Befestigungsteil (10) erstreckt, wobei, wenn das Dosengehäuse (20) vollständig in das Befestigungsteil (10) eingeführt ist, das zweite Ende des Dosengehäuses im Wesentlichen mit dem ersten Ende des Befestigungsteils bündig ist,
wobei mindestens einer (13) des mindestens einen flexibel montierten Vorsprungs des Befestigungsteils (10) in einem ersten Abstand vom mindestens einen Flanschabschnitt (12) angeordnet ist,
**dadurch gekennzeichnet, dass**
der mindestens eine (13) des mindestens einen flexibel montierten Vorsprungs des Befestigungsteils (10) so eingerichtet ist, dass er sich während des Einführens des Befestigungsteils mit seinem zweiten Ende voran in die Öffnung in der Wand (30) von der ersten Seite (31) der Wand aus in Richtung der Innenseite des Seitenwandabschnitts (11) des Befestigungsteils bewegt und beim Erreichen einer zweiten Seite (32) der Wand von selbst in seine Ruheposition zurückkehrt, wenn das Befestigungsteil derart in die Öffnung in der Wand eingeführt wird, dass der mindestens eine Flanschabschnitt in Kontakt mit der ersten Seite der Wand ist, wodurch er derart mit der Wand in Eingriff kommt,
dass die Wand zwischen dem mindestens einen Flanschabschnitt und dem mindestens einen Vorsprung eingeschlossen ist.

2. Elektroinstallationsdosenanordnung nach Anspruch 1, wobei der erste Abstand zwischen dem mindestens einen Vorsprung (13) des Befestigungsteils (10) und dem mindestens einen Flanschabschnitt (12) des Befestigungsteils gleich einer Dicke der Wand (30) ist.

3. Elektroinstallationsdosenanordnung nach Anspruch 1 oder 2, wobei mindestens einer (14) des mindestens einen flexibel montierten Vorsprungs des Befestigungsteils (10) in einem zweiten Abstand vom mindestens einen Flanschabschnitt (12) angeordnet und so eingerichtet ist, dass er in seiner Ruheposition mit einer Innenkante der Öffnung der Wand in Eingriff kommt, wenn das Befestigungsteil mit seinem zweiten Ende voran von der ersten Seite der Wand her in die Öffnung in der Wand eingeführt wird, derart, dass der mindestens eine Flanschabschnitt mit der ersten Seite der Wand in Kontakt ist.

4. Elektroinstallationsdosenanordnung nach Anspruch 4, wobei der zweite Abstand zwischen dem mindestens einen Vorsprung (14) des Befestigungsteils (10) und dem mindestens einen Flanschabschnitt (12) des Befestigungsteils kleiner ist als eine Dicke der Wand (30) .

5. Elektroinstallationsdosenanordnung nach einem der Ansprüche 1 bis 4, wobei das Dosengehäuse (20) mindestens einen flexibel montierten Vorsprung (23) umfasst, der sich in einer Ruheposition radial vom Seitenwandabschnitt (21) des Dosengehäuses erstreckt und so eingerichtet ist, dass er sich während des Einsetzens des Dosengehäuses in das Befestigungsteil (10) in Richtung der Innenseite des Seitenwandabschnitts des Dosengehäuses bewegt und mit dem Befestigungsteil in Eingriff kommt, wenn das Dosengehäuse vollständig in das Befestigungsteil eingesetzt ist, um zu verhindern, dass sich das Dosengehäuse aus dem Befestigungsteil herausbewegt.

6. Elektroinstallationsdosenanordnung nach einem der Ansprüche 1 bis 5, wobei das Befestigungsteil (10) und das Dosengehäuse (20) jeweils mindestens eine Gegenfläche (25) aufweisen, die miteinander in Eingriff stehen, wenn das Dosengehäuse vollständig in das Befestigungsteil eingeführt ist, um zu verhindern, dass sich das Dosengehäuse weiter in das Befestigungsteil bewegt.

7. Elektroinstallationsdosenanordnung nach Anspruch 6, wobei, wenn das Befestigungsteil (10) vollständig in die Öffnung der Wand (30) von der ersten Seite der Wand aus eingesetzt ist und das Dosengehäuse (20) vollständig in das Befestigungsteil eingesetzt ist, sowohl das zweite Ende des Dosengehäuses als auch das erste Ende des Befestigungsteils im Wesentlichen mit der ersten Seite der Wand bündig sind und das Dosengehäuse sich von der Wand auf der zweiten Seite der Wand weg erstreckt.

8. Elektroinstallationsdosenanordnung nach einem der Ansprüche 1 bis 7, wobei der mindestens eine Vorsprung (13, 14) des Befestigungsteils (10) ein integraler Bestandteil des Befestigungsteils ist.

9. Elektroinstallationsdosenanordnung nach einem der Ansprüche 1 bis 8, wobei der mindestens eine Vorsprung (23) des Dosengehäuses (20) ein integraler Bestandteil des Dosengehäuses ist.

10. Elektroinstallationsdosenanordnung nach einem der Ansprüche 1 bis 9, wobei das Befestigungsteil (10) und/oder das Dosengehäuse (20) aus Kunststoff hergestellt sind.

11. Elektroinstallationsdosenanordnung nach einem der Ansprüche 1 bis 10, wobei Querprofile der röhrenförmigen Seitenwandabschnitte (11, 21) des Befestigungsteils (10) und des Dosengehäuses (20) zumindest teilweise kreisförmig sind.

12. Elektroinstallationsdosenanordnung nach Anspruch 11, wobei die Querprofile der röhrenförmigen Seitenwandabschnitte (11, 21) des Befestigungsteils (10) und des Dosengehäuses (20) im Wesentlichen kreisförmig sind.

13. Elektroinstallationsdosenanordnung nach einem der Ansprüche 1 bis 12, wobei der Seitenwandabschnitt (21) und/oder der Bodenwandabschnitt (22) des Dosengehäuses mindestens eine Öffnung und/oder mindestens eine Freigabeanordnung (26) umfasst.

## Revendications

1. Ensemble formant boîtier d'installation électrique destiné à être installé dans une ouverture dans un mur d'une structure, comportant :
une partie (10) de fixation comportant une partie (11) de paroi latérale tubulaire s'étendant entre une première extrémité et une seconde extrémité de la partie de fixation, et au moins une partie (12) de bride à la première extrémité de la partie de fixation s'étendant radialement à partir de la partie de paroi latérale de la partie de fixation, et au moins une protubérance (13, 14) montée de manière souple située à une certaine distance de la ou des parties de bride et
s'étendant radialement à partir de la partie de paroi latérale de la partie de fixation dans une position de repos et étant prévue pour interagir avec le mur (30) dans sa position de repos lorsque la partie de fixation est insérée, sa seconde extrémité étant en tête, à l'intérieur de l'ouverture dans le mur depuis un premier côté (31) du mur de telle façon que la ou les parties de bride soient en contact avec le premier côté du mur ; et
une enveloppe (20) de boîtier comportant une partie de paroi latérale tubulaire (21) s'étendant entre une première extrémité et une seconde extrémité de l'enveloppe de boîtier, et une partie (22) de paroi de fond à la première extrémité de l'enveloppe de boîtier,
un diamètre extérieur de la partie de paroi latérale de l'enveloppe de boîtier étant inférieur ou égal à un diamètre intérieur de la partie de paroi latérale de la partie de fixation de telle façon que suite à l'insertion de l'enveloppe de boîtier, la première extrémité de l'enveloppe de boîtier étant en tête, dans la partie de fixation, depuis la première extrémité de la partie de fixation, l'enveloppe de boîtier verrouille la ou les protubérances de la partie de fixation dans sa position de repos, et une longueur de l'enveloppe (20) de boîtier entre sa première extrémité et sa seconde extrémité étant supérieure à une longueur de la partie (10) de fixation entre sa première extrémité et sa seconde extrémité, de telle façon que lorsque l'enveloppe de boîtier est entièrement insérée dans la partie de fixation, la première extrémité de l'enveloppe (20) de boîtier s'étende à travers la partie (10) de fixation, la seconde extrémité de l'enveloppe de boîtier étant essentiellement coplanaire avec la première extrémité de la partie de fixation lorsque l'enveloppe (20) de boîtier est entièrement insérée dans la partie (10) de fixation,
au moins une (13) de ladite ou desdites protubérances montées de manière souple de la partie (10) de fixation étant située à une première distance de la ou des parties (12) de bride, **caractérisé en ce que** ladite ou
lesdites protubérances (13) parmi ladite ou lesdites protubérances montées de manière souple de la partie (10) de fixation est prévue pour se déplacer vers l'intérieur de la partie de paroi latérale (11) de la partie de fixation pendant l'insertion de la partie de fixation, sa seconde extrémité étant en tête, à l'intérieur de l'ouverture dans le mur (30) depuis le premier côté (31) du mur, et pour revenir d'elle-même à sa position de repos une fois entrée dans un second côté (32) du mur, lorsque la partie de fixation est insérée à l'intérieur de l'ouverture dans le mur de telle façon que la ou les parties de bride soient en contact avec le premier côté du mur, interagissant ainsi avec le mur de telle façon que le mur soit pris en sandwich entre la ou les parties de bride et la ou les protubérances.

2. Ensemble formant boîtier d'installation électrique selon la revendication 1, la première distance entre la ou les protubérances (13) de la partie (10) de fixation et la ou les parties (12) de bride de la partie de fixation étant égale à une épaisseur du mur (30).

3. Ensemble formant boîtier d'installation électrique selon la revendication 1 ou 2, au moins une (14) de ladite ou desdites protubérances montées de manière souple de la partie (10) de fixation étant située à une seconde distance de la ou des parties (12) de bride et prévue pour interagir, dans sa position de repos, avec un bord intérieur de l'ouverture du mur, lorsque la partie de fixation est insérée, sa seconde extrémité étant en tête, à l'intérieur de l'ouverture dans le mur depuis le premier côté du mur de telle façon que la ou les parties de bride soient en contact avec le premier côté du mur.

4. Ensemble formant boîtier d'installation électrique selon la revendication 4, la seconde distance entre la ou les protubérances (14) de la partie (10) de fixation et la ou les parties (12) de bride de la partie de fixation étant inférieure à une épaisseur du mur (30).

5. Ensemble formant boîtier d'installation électrique selon l'une quelconque des revendications 1 à 4, l'enveloppe (20) de boîtier comportant au moins une protubérance (23) montée de manière souple s'étendant radialement à partir de la partie de paroi latérale (21) de l'enveloppe de boîtier dans une position de repos et étant prévue pour se déplacer vers l'intérieur de la partie de paroi latérale de l'enveloppe de boîtier pendant l'insertion de l'enveloppe de boîtier dans la partie (10) de fixation, et pour interagir avec la partie de fixation, lorsque l'enveloppe de boîtier est entièrement insérée dans la partie de fixation, pour empêcher l'enveloppe de boîtier de sortir de la partie de fixation.

6. Ensemble formant boîtier d'installation électrique selon l'une quelconque des revendications 1 à 5, la partie (10) de fixation et l'enveloppe (20) de boîtier comportant chacune au moins une surface (25) d'accouplement, celles-ci interagissant entre elles, lorsque l'enveloppe de boîtier est entièrement insérée dans la partie de fixation, pour empêcher l'enveloppe de boîtier d'entrer davantage dans la partie de fixation.

7. Ensemble formant boîtier d'installation électrique selon la revendication 6, lorsque la partie (10) de fixation est entièrement insérée dans l'ouverture du mur (30) depuis le premier côté du mur et l'enveloppe (20) de boîtier est entièrement insérée dans la partie de fixation, la seconde extrémité de l'enveloppe de boîtier et la première extrémité de la partie de fixation étant toutes deux essentiellement coplanaires avec le premier côté du mur et l'enveloppe de boîtier s'étendant à l'écart du mur sur le second côté du mur.

8. Ensemble formant boîtier d'installation électrique selon l'une quelconque des revendications 1 à 7, la ou les protubérances (13, 14) de la partie (10) de fixation faisant partie intégrante de la partie de fixation.

9. Ensemble formant boîtier d'installation électrique selon l'une quelconque des revendications 1 à 8, la ou les protubérances (23) de l'enveloppe (20) de boîtier faisant partie intégrante de l'enveloppe de boîtier.

10. Ensemble formant boîtier d'installation électrique selon l'une quelconque des revendications 1 à 9, la partie (10) de fixation et/ou l'enveloppe (20) de boîtier étant constituées de matière plastique.

11. Ensemble formant boîtier d'installation électrique selon l'une quelconque des revendications 1 à 10, des profils transversaux des parties (11, 21) de paroi latérale tubulaire de la partie (10) de fixation et de l'enveloppe (20) de boîtier étant au moins partiellement circulaires.

12. Ensemble formant boîtier d'installation électrique selon la revendication 11, les profils transversaux des parties (11, 21) de paroi latérale tubulaire de la partie (10) de fixation et de l'enveloppe (20) de boîtier étant principalement circulaires.

13. Ensemble formant boîtier d'installation électrique selon l'une quelconque des revendications 1 à 12, la partie de paroi latérale (21) et/ou la partie (22) de paroi de fond de l'enveloppe de boîtier comportant au moins un orifice et/ou au moins un agencement défonçable (26).
